# EUROPEAN PATENT APPLICATION

(11) **EP 1 928 196 A1**
(43) Date of publication of application: **04.06.2008**
(21) Application number: 06291848.7
(22) Date of filing: 30.11.2006
(51) Int. Cl.: H04Q 7/38, H04L 12/56

(54) **A method for radio flow control in a mobile communication system**

(71) Applicant: Alcatel Lucent, 75008 Paris (FR)
(72) Inventor: Agin, Anne, 92320 Chatillon (FR); Wong, Eliza, 78141 Velizy (FR); Sehedic, Yann, 92170 Vanves (FR); Schuetz, Thomas, 71229 Leonbert (DE)
(74) Representative: El Manouni, Josiane

(57) **Abstract**

One object of the present invention is a method for radio flow control on the radio interface of a mobile communication system having broadband radio access capability, said method comprising:
- a step of taking into account transmission capacity on at least one terrestrial interface of said system, at the time of allocating radio capacity to a mobile station for broadband radio access.

## Description

The present invention generally relates to mobile communication systems.

The present invention in particular relates to third generation mobile communication systems, such as for example UMTS (Universal Mobile Telecommunication System), and their evolutions.

In a general way, mobile communication systems are subject to standardisation; therefore, for more information on such systems, reference can be made to the corresponding standards, published by the corresponding standardisation bodies, such as in particular 3GPP (3^{rd} Generation Partnership Project).

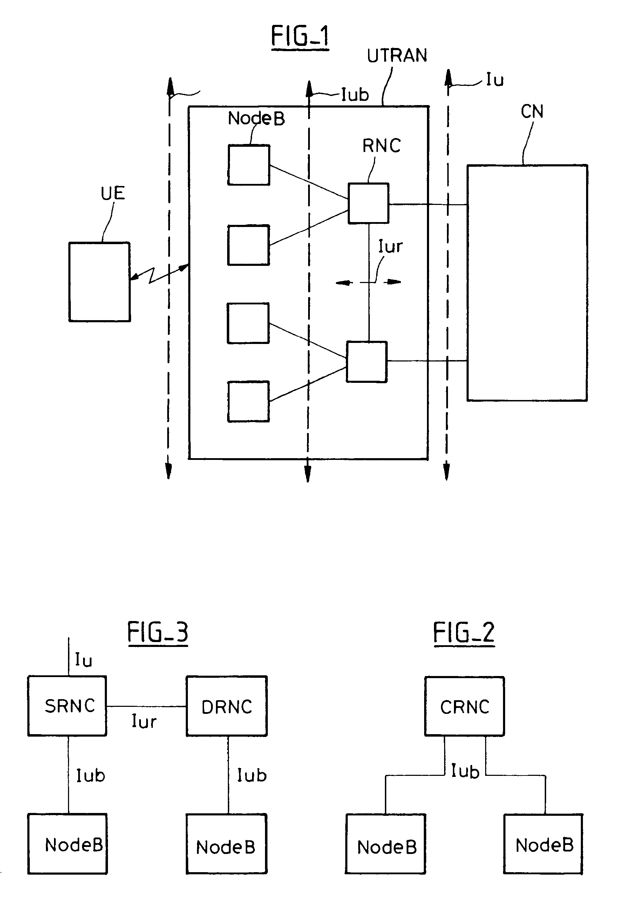

The general architecture of a system such as UMTS is recalled in figure 1.

The system comprises a mobile communication network communicating wih mobile stations or UEs (User Equipments) and with external networks (not specifically illustrated). The mobile communication network is composed of RAN (Radio Access Network), also called UTRAN (UMTS Terrestrial Radio Access Network), and CN (Core Network). UTRAN is composed of network elements such as Node B (base station), and RNC (Radio Network Controller). UTRAN communicates with UE via a radio interface called Uu-interface. UTRAN communicates with CN via a terrestrial interface called lu- interface. Within UTRAN, Node B communicates with RNC via a terrestrial interface called lub- interface, and RNCs may communicate via a terrestrial interface called lur-interface.

For a given Node B, the RNC which controls it is also called CRNC (Controlling Radio Network Controller). The CRNC has a role of control load and radio resource allocation for the Node B it controls. Figure 2 thus illustrates a CRNC controlling for example two Node B and the cells (not specifically illustrated) covered by these Node B.

For a given communication for a given UE, there is a RNC, called SRNC (Serving Radio Network Controller) having a role of control for the considered communication. A Node B connected to UE but not controlled by the SRNC communicates with the SRNC via the RNC which controls it, also called DRNC (Drift RNC), via the lur interface. This situation is in particular possible in case of soft handover. Figure 3 thus illustrates on the one hand a SRNC controlling a UE, this SRNC being in relation with the CN via lu interface, and on the other hand a DRNC controlling the UE for radio links established for cells (not specifically illustrated) controlled by this DRNC.

A description of the protocols on the different interfaces of UTRAN can be found in the corresponding Technical Specifications published by 3GPP.

Radio interface protocols include, in particular, from higher to lower layers: RLC (Radio Link Control), MAC (Medium Access Control), Physical Layer. In the RLC layer, Radio Bearers are mapped to logical channels. In the MAC layer, logical channels are mapped to transport channels. In the physical layer, transport channels are mapped to physical channels. An example of transport channel is the DCH (Dedicated Channel). Examples of physical channels are the DPDCH (Dedicated Physical Data Channel) and the DPCCH (Dedicated Physical Control Channel).

The present invention more particularly relates to the evolutions of such systems towards broadband radio access. An example of such evolutions which will more particularly be considered in the following is HSUPA (High Speed Uplink Packet Access) for UMTS, also called Enhanced Dedicated Channel (E-DCH), allowing enhanced performance with respect to Dedicated Channel (DCH), thanks to mechanisms such as fast physical layer HARQ (Hybrid Automatic Repeat reQuest) and Node B - based scheduling. However, it should be understood that the present invention is not limited to such example.

In UMTS networks, when PS traffic is transmitted on HSUPA (High Speed Uplink Packet Access), the Node B is the "master" of the transmission of data over the Uu, lub and lur interfaces, (whereas when PS traffic is transmitted over DCH, the SRNC is the "master" of this transmission over the Uu, lub and lur interfaces).

This means in particular that:
- The Node B allocates a given "radio capacity" or "grant" to a HSUPA UE, with E-AGCH and E-RGCH channels, in other words, the Node B gives the "right" to the UE to send E-DCH data at a given maximum power, corresponding to a given maximum data-rate
- The Node B sends the correctly received E-DCH data from HSUPA UEs on lub/lur interfaces to SRNC, with lub/lur Frame Protocol.

In such context, problems are that congestion on lub and/or lur may arise, due in particular to the following reasons:
- The radio network protocols are independent from the transmission network layer used. Therefore, usual approach is that the "grant" allocated by Node B is decided only from radio criteria, such as the radio conditions of the UE, the radio load, the available radio resources, the E-DCH UE category...etc.
- When the Node B sends a "radio capacity" or "grant" to one HSUPA UE, it is usually not aware of the bandwidth available on the terrestrial links between SRNC and Node B.
- The lub and lur transmission capacities are usually limited in term of bandwidth.
- If the sum of all "grants" allocated by one Node B towards all HSUPA UEs exceeds the configured lub transmission capacity, then there is a risk of congestion on lub.
- If the sum of all "grants" allocated by several Nodes B towards several HSUPA UEs, which are controlled by the same SRNC and CRNC, exceeds the configured lur transmission capacity, then there is a risk of congestion on lur.

Congestion on lub and lur usually result in loss of data, retransmissions in upper layers and decrease of the useful bit-rate for the end user.

A solution to avoid such problems would be to over-dimension the lub and lur terrestrial links, according to the maximum possible grants (or maximum total HSUPA radio capacity in bit/s) that can be allocated by Node B.

Such solution however results in a waste of transmission resources, and in a huge increase of transmission costs for the operator.

This is particularly the case for early HSUPA deployment, where the operator usually wants to introduce HSUPA in its network, without increasing the lub Uplink transmission capacity. Then, the HSUPA radio capacity would always be larger than the lub Uplink transmission capacity and prior art solution, consisting in over-dimensioning the lub Uplink transmission capacity cannot apply.

This can be illustrated considering an example of Node B implementation. In an example of HSDPA configuration, a Node B controlling 3 cells can be configured with 2 Base Band boards (1 for HSDPA, 1 for DCH) and one E1 link. To introduce HSUPA with the minimum cost for the operator, it is possible for example to use the same configuration (e.g. 1 Base Band board for HSUPA/HSDPA, 1 Base Band board for DCH).

With such configuration, the maximum Uplink radio capacity for HSUPA is actually the minimum between the Node B HSUPA processing capacity (e.g 6 Mbps, if we assume that the HSUPA processing capacity per Base Band board is 6 Mbps) and the sum over all controlled cells of the HSUPA radio capacity per cell (e.g. 3x4=12 Mbps, if we assume that the HSUPA radio capacity per cell is 4 Mbps). Then the maximum Uplink radio capacity would be in this example 6 Mbps, whereas the maximum Uplink lub transmission capacity for both DCH and HSUPA is only 2 Mbps.

Therefore, for such configuration, the maximum Uplink radio capacity will be 3 times larger than the maximum Uplink lub capacity.

If nothing specific is implemented in Node B to avoid congestion, then the consequence in such case would be following:
- With usual approach, as Node B allocates radio capacity or "grants" based only on radio information, the sum of allocated capacity to HSUPA UEs (e.g. 6 Mbps) could be larger than the lub transmission capacity towards SRNC (e.g. 2 Mbps on lub)
- Then the Node B could receive HSUPA data from all HSUPA UEs at a higher rate (e.g. 6 Mbps) than what could be sent on transmission interfaces (e.g. 2 Mbps).
- In order to respect the traffic contract on transmission interface, the Node B would perform some traffic shaping. In most optimistic assumption, if HSUPA traffic could use the full lub Uplink transmission capacity, the Node B would send data with an output rate of 2 Mbps.
- As the ATM buffer of the Node B has a finite value, when this buffer was filled, any incoming HSUPA data would be discarded

This would result in loss of data in Node B side, retransmissions by upper layers (RLC or/and TCP) and decrease of useful bit-rate for the end-user.

It is an object of the present invention to solve part or all of such problems, or to avoid part or all of such drawbacks. More generally it is an object of the present invention to improve the performances of such systems.

These and other objects are achieved, in one aspect of the present invention, by a method for radio flow control on the radio interface of a mobile communication system having broadband radio access capability, said method comprising:
- a step of taking into account transmission capacity on at least one terrestrial interface of said system, at the time of allocating radio capacity to a mobile station for broadband radio access.

An other aspect of the present invention is a method comprising the steps of, at the time of performing a new radio capacity allocation:
- computing the sum of transmission capacities corresponding to already allocated radio capacities, and of transmission capacity corresponding to a new required radio capacity,
- comparing said sum to an available transmission capacity,
- allocating said new required radio acapcity if said sum does not exceed said available transmission capacity.

In an embodiment, said method further comprises a step of:
- evaluating an available transmission capacity.

In an embodiment, said method further comprises a step of:
- evaluating an available transmission capacity based on information signalled between network entities.

In an embodiment, said method further comprises a step of:
- evaluating an available transmission capacity based on measurements.

In an embodiment, said method further comprises a step of:
- evaluating an available transmission capacity based on Operation & Maintenance configuration.

In an embodiment, said broadband radio access capability corresponds to High Speed Uplink Packet Access HSUPA functionality.

In an embodiment, said terrestrial interfaces include at least one of lub and lur interfaces of UMTS Terrestrial Radio Access Network UTRAN.

These and other objects are achieved, in another aspect of the present invention, by a network entity, such as in particular a radio access network entity, such as in particular base station (or Node B for UMTS), for performing such a method.

Another aspect of the present invention is a network entity for a mobile communication system having broadband radio access capability, said network entity comprising:
- means for taking into account transmission capacity on at least one terrestrial interface of said system, at the time of allocating radio capacity to a mobile station for broadband radio access.

Another aspect of the present invention is a network entity for a mobile communication system having broadband radio access capability, said network entity comprising:
- means for signalling to at least one other network entity of said system a transmission capacity available for broadband radio access on at least one terrestrial interface of said system.

Another aspect of the present invention is a network entity for a mobile communication system having broadband radio access capability, said network entity comprising:
- means for using information as to a transmission capacity available for broadband radio access on at least one terrestrial interface of said system, signalled to said network entity by at least one other network entity of said system, for performing radio flow control.

In an embodiment, said available transmission capacity is signalled using NBAP protocol.

In an embodiment, said available transmission capacity is signalled using RNSAP protocol.

In an embodiment, said available transmission capacity is signalled during E-DCH configuration.

These and other aspects and/or objects of the present invention will become more apparent from the following description taken in conjunction with the accompanying drawings, wherein:
- figure 1 is intended to recall the general architecture of a mobile communication system, such as in particular UMTS,
- figures 2 and 3 are intended to recall the different possible roles of a RNC : CRNC, SRNC, DRNC,
- figure 4 is intended to illustrate a first example of application of the present invention,
- figure 5 is intended to illustrate a second example of application of the present invention.

The present invention may also be explained as follows, to simplify based on examples.

In these different examples, to avoid congestion, the present invention proposes that the Node B entity that is responsible for sending radio capacity allocation (e.g. E-DCH scheduler, allocating grants to HSUPA UEs) shall ensure that the sum of allocated radio capacities for all users, does not exceed the uplink transmission capacity configured on the terrestrial interface(s).

The present invention proposes to perform a radio flow control on the radio interface of a mobile communication system having broadband radio access capability, such that transmission capacity on at least one terrestrial interface of said system is taken into account at the time of allocating radio capacity to a mobile station for broadband radio access.

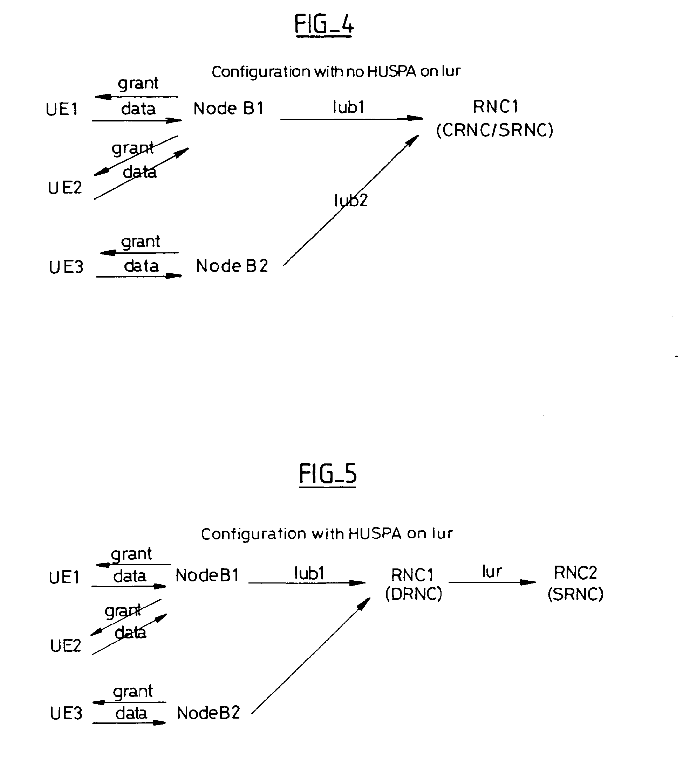

A first example, where HSUPA is not supported on lur, is now more particularly considered, in relation with figure 4.

In figure **4****:**
- Node B 1 is the serving E-DCH Node B for two HSUPA UEs, UE1 and UE2
- Node B 2 is the serving E-DCH Node B for one HSUPA UE, UE3
- Node B1 and Node B 2 are controlled by RNC1
- lub link between Node B1 and RNC1 is configured in Uplink with bandwidth lub_BW1
- lub link between Node B 2 and RNC1 is configured in Uplink with bandwidth lub_BW2.

In this example, when one grant is assigned to UE1 and a new grant has to be decided for U2, the following steps can be performed, for example in Node B1:
- The Node B knows which bandwidth is available in Uplink for HSUPA (e.g. Available_lub_BW1 = lub_BW1)
- The Node B knows the relation between allocated maximum E-DPDCH to DPCCH power ratio (this is the "grant") and the allocated maximum E-DCH bit-rate (thanks to a mapping table or a formula)
- When allocating a new "grant" (e.g. to UE2), the Node B computes or retrieves the E-DCH bit-rate corresponding to this maximum E-DPDCH to DPCCH power ratio (e.g. new_EDCH_BW_UE2)
- The Node B compares the sum of the total already allocated E-DCH bit-rate (e.g. allocated_EDCH_BW_allUE = allocated_EDCH_BW_UE1) and the new computed E-DCH bit-rate (e.g. new_EDCH_BW_UE2) to the bandwidth available in Uplink for HSUPA (e.g. Available_lub_BW1)
- If this sum (e.g. allocated_EDCH_BW_allUE + new_EDCH_BW_UE2) does not exceed the bandwidth available in Uplink for HSUPA, then the Node B can assign the grant corresponding to new_EDCH_BW_UE2
- Else, the Node B reduces the grant allocated to UE2 so that the total allocated E-DCH bit-rate does not exceed the bandwidth available in Uplink for HSUPA.

This is also valid if the Node B does not know which transmission capacity is configured on the interface. This is the case for example for the Node B, in the context of open lub, when a shared user plane VC is used dynamically for both DCH and HSUPA traffic: the Node B does not know which bandwidth is available for HSUPA on lub in uplink.

In this case, the Node B could use any possible means, to evaluate the transmission capacity available for HSUPA on lub in uplink, for example:
- Based on signalling information from CRNC, for example with NBAP protocol: the CRNC could indicate to the Node B what is the available bandwidth for HSUPA, during E-DCH configuration. In another aspect, the present invention also has for its object such signalling.
- Based on measurements by the Node B: the Node B could measure for example the bandwidth used by DCH traffic, and estimate the bandwidth available for HSUPA traffic as the difference between the user plane VC bandwidth for both DCH and HSUPA, and the measured bandwidth for DCH.
- Based on O&M configuration: for example the operator could configure an internal O&M parameter in the Node B, indicating which maximum bandwidth can be used for HSUPA traffic in uplink (or alternatively the operator could e.g. configure a ratio K, so that Available_lub_BW1 = K x lub_BW1, where K may be an over-booking factor if greater than 1, or a safety margin if between 0 and 1.

Grant reduction in case the sum of allocated E-DCH rates for all users exceeds the available bandwidth in Uplink for HSUPA could also be performed in following ways:
- No differentiation of users: all users are handled the same way by the grant reduction.
- With a differentiation of users: all users are handled differently, according to some combination of users characteristics, such as priority, service used, data-rate... (For example, we could reduce the grants only for low priority users, and maintain a good grant for high priority users.)

A second example, where HSUPA is not supported on lur, is now more particularly considered, in relation with figure 5.

In figure 5:
- Node B 1 is the serving E-DCH Node B for two HSUPA UEs, UE1 and UE2
- Node B 2 is the serving E-DCH Node B for one HSUPA UE, UE3
- Node B1 and Node B 2 are controlled by RNC1
- lub link between Node B1 and RNC1 is configured in Uplink with bandwidth lub_BW1
- lub link between Node B 2 and RNC1 is configured in Uplink with bandwidth lub_BW2
- RNC2 is the Serving RNC for UE1, UE2 and UE3
- lur link between RNC1 and RNC2 is configured in Uplink with bandwidth lur_BW.

In this second example, the same solution as described above for the first example applies.

This solution is also valid if the Node B does not know the available bandwidth in Uplink for HSUPA.

If the Node B does not know which transmission capacity is configured on the interface(s) to SRNC, it could use any possible means, to evaluate the transmission capacity available for HSUPA on lub/lur in uplink, for example:
- Based on signalling information from SRNC, for example with RNSAP and NBAP protocol: the SRNC could indicate to the Node B what is the available bandwidth for HSUPA, during E-DCH configuration
- Based on O&M configuration: for example the operator could configure an internal O&M parameter in the Node B, indicating which maximum bandwidth can be used for HSUPA traffic in uplink
- Based on assisted network configuration: for example, the OMC could configure automatically this parameter Available_lub_BW1, according to the UL bandwidth configured on all interfaces of the UTRAN (e.g. interfaces lub1, lub2, lur), and to other parameters possibly chosen by operator(e.g. K) for example Available_lub_BW1 = K x Min (lub_BW1, lur_BW x lub_BW1/(lub_BW1 + lub_BW2)), where K may be an over-booking factor if greater than 1, or a safety margin if between 0 and 1.

With the present invention, the operator can deploy HSUPA at low cost on any Node B configuration, without any need to increase the Uplink transmission capacity. Moreover, even with low Uplink transmission capacity, the HSUPA traffic should not encounter much congestion on terrestrial links, and the end-user data rate should remain acceptable.

On the contrary, with prior art solution consisting in over-dimensioning the transmission links, such low cost introduction of HSUPA, without any increase of the transmission capacity would not be possible. HSUPA should be introduced only on Node B configurations with large Uplink transmission capacity. If operator deployed HSUPA on Node B configurations with low lub capacity, the HSUPA traffic should encounter large congestion on terrestrial links, and the end-user data rate should be low.

The present invention also has for its object a network entity (such as in particular a radio access network entity, such as in particular base station or Node B for UMTS) for a mobile communication system having broadband radio access capability (such as in particular HSUPA for UMTS), said network entity comprising:
- means for taking into account transmission capacity on at least one terrestrial interface of said system, at the time of allocating radio capacity to a mobile station for broadband radio access.

The present invention also has for its object a network entity (such as in particular a radio access network entity, such as in particular radio network controller or RNC for UMTS) for a mobile communication system having broadband radio access capability (such as in particular HSUPA for UMTS), said network entity comprising:
- means for signalling to at least one other network entity (such as in particular a radio access network entity, such as in particular radio network controller or RNC for UMTS) a transmission capacity available for broadband radio access on at least one terrestrial interface of said system (such as in particular at least one of lub and lur interfaces of UMTS Terrestrial Radio Access Network UTRAN).

The present invention also has for its object a network entity (such as in particular a radio access network entity, such as in particular radio network controller or RNC for UMTS) for a mobile communication system having broadband radio access capability (such as in particular HSUPA for UMTS), said network entity comprising:
- means for using information as to a transmission capacity available for broadband radio access on at least one terrestrial interface of said system (such as in particular at least one of lub and lur interfaces of UMTS Terrestrial Radio Access Network UTRAN), signalled to said network entity by at least one other network entity (such as in particular a radio access network entity, such as in particular radio network controller or RNC for UMTS), for performing radio flow control.

The detailed implementation of the above-mentioned means does not raise any special problem for a person skilled in the art, and therefore such means do not need to be more fully disclosed than has been made above, by their function, for a person skilled in the art.

## Claims

1. A method for radio flow control on the radio interface of a mobile communication system having broadband radio access capability, said method comprising:
- a step of taking into account transmission capacity on at least one terrestrial interface of said system, at the time of allocating radio capacity to a mobile station for broadband radio access.

2. A method according to claim 1, comprising the steps of, at the time of performing a new radio capacity allocation:
- computing the sum of transmission capacities corresponding to already allocated radio capacities, and of transmission capacity corresponding to a new required radio capacity,
- comparing said sum to an available transmission capacity,
- allocating said new required radio acapcity if said sum does not exceed said available transmission capacity.

3. A method according to any of claims 1 or 2, further comprising a step of:
- evaluating an available transmission capacity.

4. A method according to claim 3, comprising a step of:
- evaluating an available transmission capacity based on information signalled between network entities.

5. A method according to claim 3, comprising a step of:
- evaluating an available transmission capacity based on measurements.

6. A method according to claim 3, comprising a step of:
- evaluating an available transmission capacity based on Operation & Maintenance configuration.

7. A method according to any of claims 1 to 6, wherein said broadband radio access capability corresponds to High Speed Uplink Packet Access HSUPA functionality.

8. A method according to any of claims 1 to 7, wherein said terrestrial interfaces include at least one of lub and lur interfaces of UMTS Terrestrial Radio Access Network UTRAN.

9. A network entity for a mobile communication system, comprising means for performing a method according to any of claims 1 to 8.

10. A network entity for a mobile communication system having broadband radio access capability, said network entity comprising:
- means for taking into account transmission capacity on at least one terrestrial interface of said system, at the time of allocating radio capacity to a mobile station for broadband radio access.

11. A network entity for a mobile communication system having broadband radio access capability, said network entity comprising:
- means for signalling to at least one other network entity of said system a transmission capacity available for broadband radio access on at least one terrestrial interface of said system.

12. A network entity for a mobile communication system having broadband radio access capability, said network entity comprising:
- means for using information as to a transmission capacity available for broadband radio access on at least one terrestrial interface of said system, signalled to said network entity by at least one other network entity of said system, for performing radio flow control.

13. A network entity according to claim 11 or 12, wherein said available transmission capacity is signalled using NBAP protocol.

14. A network entity according to claim 11 or 12, wherein said available transmission capacity is signalled using RNSAP protocol.

15. A network entity according to any of claims 11 to 14, wherein said available transmission capacity is signalled during E-DCH configuration.
